# EUROPEAN PATENT APPLICATION

(11) **EP 2 664 435 A1**
(43) Date of publication of application: **20.11.2013**
(21) Application number: 13180081.5
(22) Date of filing: 16.06.2010
(51) Int. Cl.: B29C 45/17, B29C 33/44

(54) **Molding apparatus**

(30) Priority: 17.08.2009 US 234410 P; 17.12.2009 US 287266 P
(62) Divisional of application: 10809385.7
(71) Applicant: Husky Injection Molding Systems S.A., 3401 Dudelange (LU)
(72) Inventor: Glaesener, Pierre, 7780 Bissen (LU)

(57) **Abstract**

Disclosed herein is, amongst other things, a molding apparatus that includes a collet (116, 316) for use in a first stack portion (110, 310) of a mold stack (106, 306). The mold stack (106, 306) is associated, in use, with an injection mold (100). The collet (116, 316) is structured to define a plurality of molding fingers (140, 340) that are resiliently deflectable, in use, between a neutral configuration and a deflected configuration, the plurality of molding fingers (140, 340) being cooperable to define an encapsulated portion (145) of a molding cavity (101) when arranged in abutment. Furthermore, each of the plurality of molding fingers (140, 340) defines a cam follower (142, 342) that is cooperable, in use, with a bearing (170) with which to link the cam follower (142, 342) with a cam (150, 250) for the exercising thereof between the neutral configuration and the deflected configuration.

## Description

### TECHNICAL FIELD

The non-limiting embodiments disclosed herein generally relate to a molding apparatus, and more particularly to a first stack portion of a mold stack for use in an injection mold.

### BACKGROUND

United States Patent 5,630,977 to Catalanotti et al., published on May 20, 1997 teaches an injection molding apparatus method and system for molding a plastic article having inward or outward projections on the exterior surface. The injection mold has a first and second mold part adapted to move between a closed, molding position and an open, article-recovering position and which defines a mold cavity for an article to be molded. The first expandable cavity mold part has a base with an opening therethrough and a plurality of outwardly tapered arms extending from the base to an open end that extends into the mold cavity where it is held in place by a striker plate during the injection molding process. The second inner mandrel mold part has a one and other end adapted to move reciprocally and longitudinally within the base and arms of the expandable cavity element, the top end threaded to form the interior threaded surface of the injection molded article. After injecting a molding plastic material at high pressure and temperature, the inner mandrel is removed from the inside and the striker plate removed from the upper side creating an article-recovering position for recovery of the injection molded article.

United States Patent 5,281,385 to Julian, published on January 25, 1994 teaches a method of injection molding a container cap with a precision thread having a tamper indicating band depending from the bottom of the cap skirt. Collet jaws form at least a frangible connection between the bottom of the cap skirt and the top of the tamper indicating band, and these jaws are moved radially outward specified amounts during the molding process to provide clearance for stripping an inwardly directed retaining element on the band from the core and for ejection of the finished cap.

United States Patent 5,470,221 to Gaiser, published on November 28, 1995 teaches a compact core and ejector assembly includes an elongate core terminating in a male mold component and including a cylindrical shoulder which supports the top plate of an associated core support frame. The shoulder includes opposing, longitudinally-extending slots which receive jaw elements, which are pivotally mounted on a reciprocating knock out plate, and therefore guide the jaw elements during the ejection procedure. The top plate, knock out plate and core plate are cut away so that rows of cores may be arranged in a densely packed configuration. In a preferred embodiment, the lateral sides of the top, knock out and core plates have a cut away or sinusoidal shape so that abutting rows fit in an overlapping relationship.

United States Patent 5,387,389 to Catalanotti et al., published on February 7, 1995 teaches an injection molding apparatus method and system for molding a plastic article having inward or outward projections on the exterior surface. The injection mold has a first and second mold part adapted to move between a closed, molding position and an open, article-recovering position and which defines a mold cavity for an article to be molded. The first expandable cavity mold part has a base with an opening therethrough and a plurality of outwardly tapered arms extending from the base to an open end that extends into the mold cavity where it is held in place by a striker plate during the injection molding process. The second inner mandrel mold part has a one and other end adapted to move reciprocally and longitudinally within the base and arms of the expandable cavity element, the top end threaded to form the interior threaded surface of the injection molded article. After injecting a molding plastic material at high pressure and temperature, the inner mandrel is removed from the inside and the striker plate removed from the upper side creating an article-recovering position for recovery of the injection molded article.

### SUMMARY

According to a general aspect, there is provided a molding apparatus that includes a collet for use in a first stack portion of a mold stack. The mold stack is associated, in use, with an injection mold. The collet is structured to define a plurality of molding fingers that are resiliently deflectable, in use, between a neutral configuration and a deflected configuration, the plurality of molding fingers being cooperable to define an encapsulated portion of a molding cavity when arranged in abutment. Furthermore, each of the plurality of molding fingers defines a cam follower that is cooperable, in use, with a bearing with which to link the cam follower with a cam for the exercising thereof between the neutral configuration and the deflected configuration.

According to another aspect, there is provided a molding apparatus comprising a collet for use in a mold stack that is arrangeable, in use, in an injection mold to define a molding cavity within which a molded article may be molded, wherein the collet is structured to define a plurality of molding fingers that are resiliently deflectable between a neutral configuration and a deflected configuration, the plurality of molding fingers being in abutment to define an encapsulated portion of the molding cavity when arranged in the neutral configuration, and wherein the plurality of molding fingers being spaced apart for release of the molded article when arranged in the deflected configuration.

According to a further aspect the collet is a member of a first stack portion of the mold stack, wherein the first stack portion is associated, in use, with a first mold half of the injection mold. Furthermore, the collet has a tubular body that is slidably arrangeable around an outer core of the first stack portion for accommodating a relative repositioning thereof, in use, along a first axis of the mold stack.

According to yet another aspect, each of the plurality of molding fingers includes one of a cam follower and a cam associated therewith that is cooperable, in use, with another one of the cam follower and the cam that is associated with the outer core to exercise the plurality of molding fingers between the neutral configuration and the deflected configuration with the relative repositioning of the collet and the outer core.

These and other aspects and features will now become apparent to those skilled in the art upon review of the following description of specific non-limiting embodiments in conjunction with the accompanying drawings.

### DETAILED DESCRIPTION OF THE DRAWINGS

The detailed description of illustrative (non-limiting) embodiments will be more fully appreciated when taken in conjunction with the accompanying drawings, in which:
FIG. 1 shows a perspective view of a non-limiting embodiment of a first stack portion of a mold stack;
FIG. 2 shows another perspective view of the first stack portion of FIG. 1;
FIG. 3 shows a section view of an injection mold showing the mold stack of FIG. 1 arranged therein;
FIG. 4 shows a section view of the first stack portion of FIG. 1;
FIG. 5 shows a side view of an end portion of an outer core belonging to the first stack portion of FIG. 1;
FIGS. 6A through 6E show a sequence of section views, each taken through an upper portion of the first stack portion of FIG. 1, that show various stages in the operation thereof;
FIGS. 7A through 7E show a sequence of top views of the first stack portion of FIG. 1 that show the various stages in the operation thereof that correlate to FIGS. 6A through 6E, respectively;
FIGS. 8A through 8B show side views of the outer core of FIG. 5 that show the various stages in the operation thereof that correlate to FIGS. 7C and 7D, respectively;
FIGS. 9A through 9D show a sequence of section views of another non-limiting embodiment of a first stack portion of a mold stack that show various stages in the operation thereof;
FIG. 10 shows a side view of an upper portion of a collet that is associated with yet another non-limiting embodiment of a first stack portion of a mold stack;
FIG. 11 shows a section view through a portion of a lock ring that is associated with the first stack portion of FIG. 10;
FIGS. 12A through 12E show a sequence of section views of a portion of the first stack portion of FIGS. 10 and 11 that illustrate various stages in the operation thereof.

The drawings are not necessarily to scale and may be illustrated by phantom lines, diagrammatic representations and fragmentary views. In certain instances, details that are not necessary for an understanding of the embodiments or that render other details difficult to perceive may have been omitted.

### DETAILED DESCRIPTION OF THE NON-LIMITING EMBODIMENT(S)

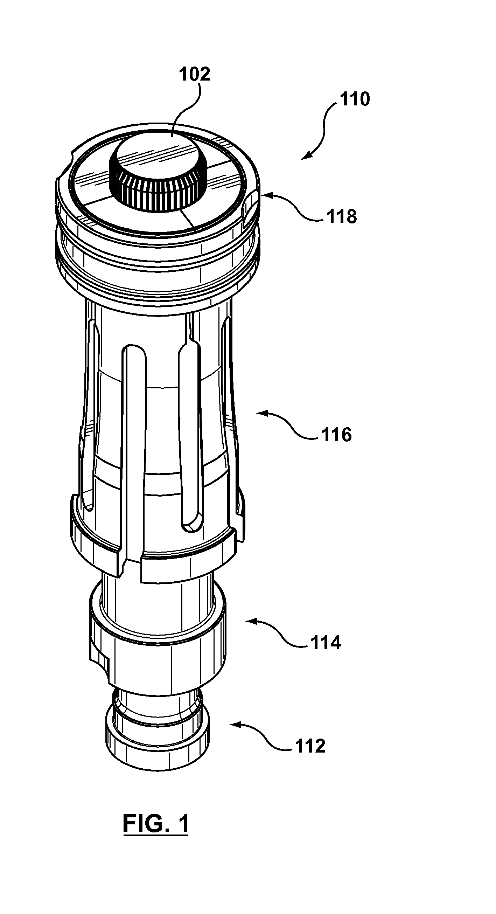

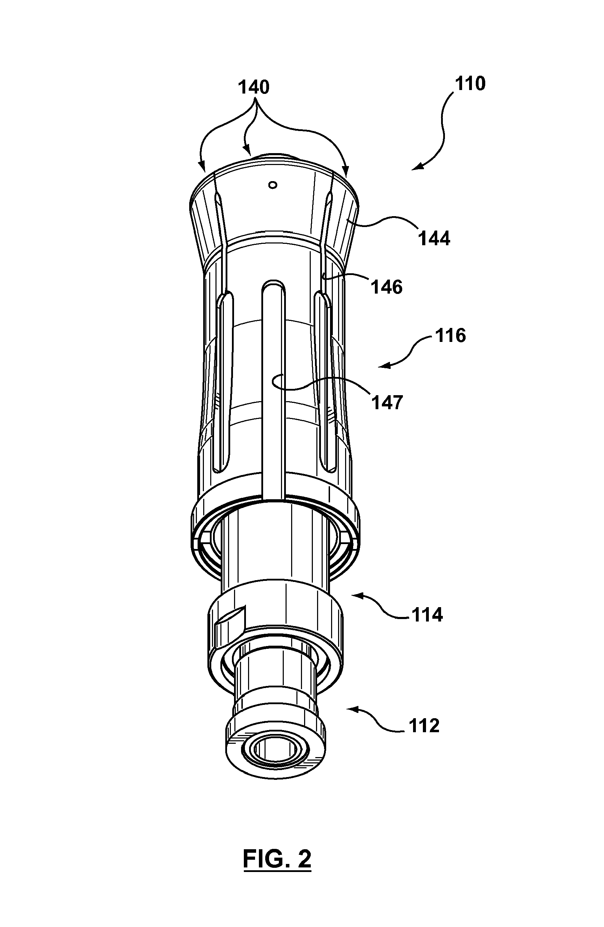

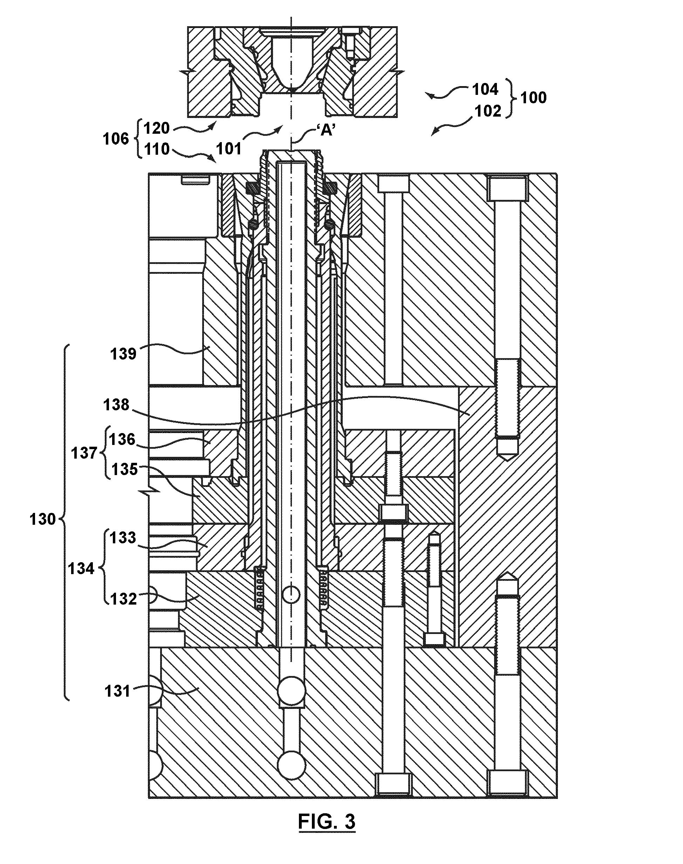

Reference will now be made to FIGS. 1 and 2 which show alternate perspective views of a non-limiting embodiment of a molding apparatus that includes a first stack portion 110 of a mold stack 106 (FIG. 3). With further reference to FIG. 3 an injection mold 100 is shown within which the mold stack 106, including the first stack portion 110, is arranged. More particularly, the injection mold 100 is shown in an open configuration for sake of delineating a first mold half 102 from a second mold half 104 thereof, wherein the first stack portion 110 is arranged in the first mold half 102, and a second stack portion 120 of the mold stack 106 is arranged in the second mold half 104. When the injection mold 100 is otherwise arranged in a molding configuration (i.e. mold closed), not shown, a molding cavity 101 is definable between the first stack portion 110 and the second stack portion 120 for the molding, in use, of a molded article 102 therein. Whereas the molded article 102 in the present non-limiting embodiment is a closure of the type for capping a bottle, and the like, no such limitation on the generality of the molded article 102 is implied. As such, the molding cavity 101 may be otherwise configured to mold other varieties of molded article 102.

Where the structure and operation of the injection mold 100, including the mold stack 106, is consistent with the general state of the art a detailed description thereof has been omitted. Accordingly, the teachings provided hereafter have been focused on the structure and operation of the first stack portion 110 and of the supporting structures of a first mold shoe 130 in which it is arrangeable.

Still with reference to FIG. 3, it can be seen that the first mold half 102 of the non-limiting embodiment broadly includes a first mold shoe 130 within which the first stack portion 110 of the mold stack 106 is arranged. Also with reference to FIGS. 1 and 2, it may be appreciated that the non-limiting embodiment of the first stack portion 110 broadly includes an inner core 112, an outer core 114, and a collet 116. Each of the foregoing members of the first stack portion 110 defines a portion of the molding cavity 101. The lock ring 118 shown in FIG. 1, and described in detail later herein, is shown due to its close association with the first stack portion 110, and more particularly with the collet 116, but is not, strictly speaking, a member of the first stack portion 110 but is rather a member of the first mold shoe 130 (FIG. 3) within which the first stack portion 110 is arrangeable.

The second mold half 104 of the non-limiting embodiment, as shown in FIG. 3, broadly includes a second mold shoe 195 within which the second stack portion 120 of the mold stack 106 is arranged. The second stack portion 120 of the mold stack 106 may include, as shown, a gate insert122 and a cavity insert 124 that cooperate together, in use, to define a cavity portion of the molding cavity 101. More particularly, the gate insert 122 and the cavity insert 124 may define an upper cavity portion and an outer cavity portion of the molding cavity 101, respectively.

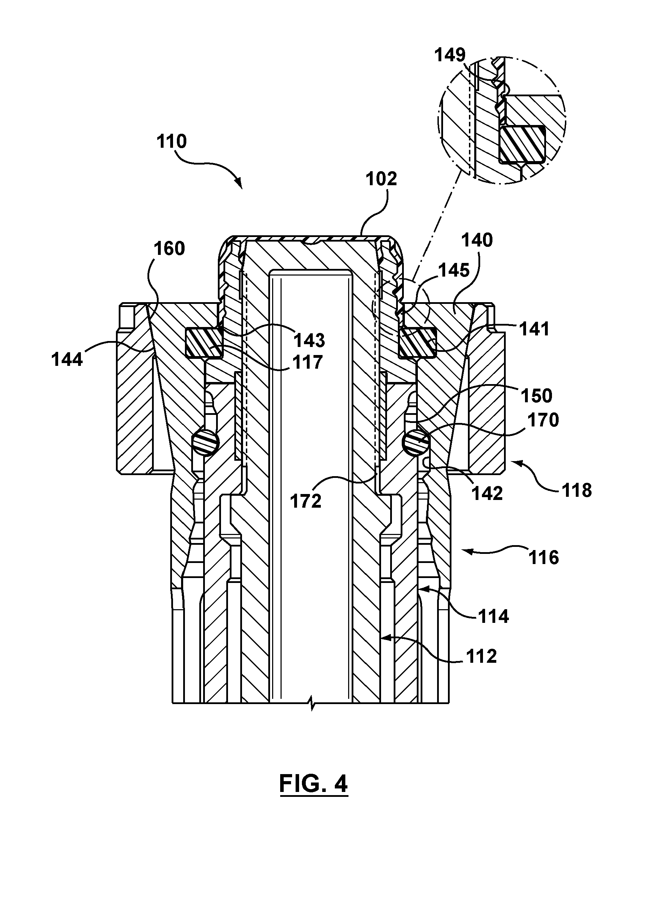

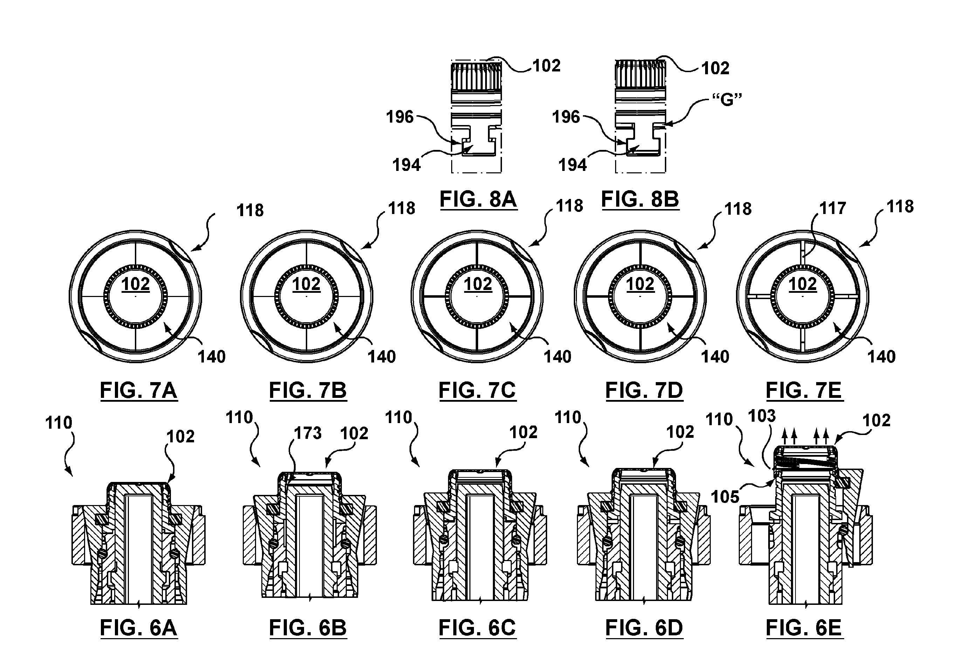

The description of the various members of the first stack portion 110 will begin with the structure and operation of a non-limiting embodiment of the collet 116. With reference to FIGS. 2, 3 and 4, it may be appreciated that the collet 116 may include a generally tubular body that has been structured to define a plurality of molding fingers 140, each of which is resiliently deflectable between a neutral configuration and a deflected configuration. The plurality of molding fingers 140 are shown therein in an abutting relation that defaults with their return to the neutral configuration (i.e. non-deflected). That is, the plurality of molding fingers 140 is normally closed. The plurality of molding fingers 140 are structured to define an encapsulated portion 145 (FIG. 4) of the molding cavity 101 when in abutment. The foregoing may be furthermore appreciated with further reference to FIGS. 6A and 7A wherein the plurality of molding fingers 140 are shown to be tightly closed around the molded article 102 therein (i.e. these views correlate to the configuration of the first stack portion 110 for sake of the molding of the molded article 102 therein). In sharp contrast, the plurality of molding fingers 140 may otherwise be resiliently deflected into the deflected configuration, as shown with reference to FIGS. 6E and 7E, wherein the plurality of fingers are arranged to be spaced apart from one another for sake of releasing the molded article 102 therefrom (i.e. define a gap therebetween that is sufficient for an encapsulated portion 103 of the molded article 102 to pass through).

The manner by which the plurality of molding fingers 140 may be formed or otherwise defined on the tubular body of the collet 116 is not particularly limited, and may include, for example, forming a plurality of first radial slits 146 through the tubular body that extend along a portion of a length of the tubular body from a first end (i.e. free end) thereof.

Reference will now be made to the operational sequence of the first stack portion 110 that is developed in FIGS. 6A through 6E, and more particularly FIGS. 6C, 6D and 6E, wherein it can be appreciated that the collet 116 is slidably arrangeable around the outer core 114 for accommodating a relative re-positioning thereof, in use, along a first axis 'A' of the mold stack 106, for sake of a stripping, in use, of the molded article 102 from the outer core 114. The foregoing operational sequence will be discussed in detail later herein. The relative re-positioning is driven, in use, through a displacement of the collet 116, along the first axis 'A', by means of an ejector actuator 137 (FIG. 3) that is linked thereto. More particularly, and as shown with reference to FIG. 3, the ejector actuator 137 is associated with the first mold shoe 130 and includes a first actuator plate 135 and a second actuator plate 136 that are releasably connectable together, by means of fasteners, for clamping a flange portion 149 (FIG. 2) of the collet 116 in a seat 128 (FIG. 3) that is definable therebetween. The first actuator plate 135 and the second actuator plate 136 are in turn connectable to a drive means, not shown, for a displacement thereof and in so doing are operable, in use, to move the collet 116 along the first axis 'A', between a collet molding position (FIG. 6A - the plurality of molding fingers 140 being in the neutral configuration) and an ejection position (FIG. 6E - the plurality of molding fingers 140 being in the deflected configuration). The type and location of the drive means is not particularly limited and as such may include, for example, an ejection device, not shown, that is associated with an injection molding machine, not shown, that is linkable to the ejector actuator 137, and/or a electro-mechanical, pneumatic, hydraulic, or other such actuator, not shown, that is associated with the first mold shoe 130.

As shown with reference to FIGS. 2 and 4, a collet taper 144 may be defined exteriorly on the plurality of molding fingers 140. The collet taper 144 is structured to be cooperable, in use, with a lock taper 160 defined on the lock ring 118 of the first mold shoe 130 (FIG. 3) with the collet 116 arranged in the collet molding position (FIG. 6A), whereby the plurality of molding fingers 140 are lockable together, in the neutral configuration, for sake of maintaining them in abutment during a step of injecting molding material into the molding cavity 101. A technical effect of the plurality of molding fingers 140 being biased into the abutting relation (i.e. their neutral configuration) may include minimal wear of the collet taper 144 and/or lock taper 160 as there is limited sliding of these surfaces with movement of the outer core 114 along the first axis 'A'.

The structure of the lock ring 118 includes an annular body that defines the lock taper 160 interiorly thereon. With reference to FIG. 3, it may be furthermore appreciated that the lock ring 118 is arranged, in use, in a front plate 139 of the first mold shoe 130. The front plate 139 may furthermore be linked to a core plate 131 through a frame plate 138, fastened thereto, both of which are members of the first mold shoe 130, through which a mold clamping force may be channeled, in use, wherein a confronting face of the front plate 139 in cooperation with a complementary confronting face of the second mold half 104 provide a flat interface between the first mold half 102 and the second mold half 104.

As shown with reference to FIG. 2, the collet 116 may further define a plurality of retaining fingers 148 that are resiliently deflectable, in use, between an installed configuration (i.e. neutral arrangement thereof), as shown, and an assembly configuration (i.e. inwardly deflected arrangement thereof), not shown, for sake of arranging, in use, the flange portion 149 of the collet 116 in the seat 128 that is defined in the ejector actuator 137 (FIG. 3). The manner by which the plurality of retaining fingers 148 may be formed or otherwise defined on the tubular body of the collet 116 is not particularly limited, and may include, for example, forming a plurality of second radial slits 147 through the tubular body that extend along a further portion of a length of the tubular body from a second end thereof (i.e. adjacent the end of the collet 116 that is structured to cooperate with the ejector actuator 137). As such, a width of each of the plurality of second radial slits 147 may be selected to ensure that the flange portion 149 may be sufficiently collapsed, with the plurality of retaining fingers 148 arranged in the assembly configuration, not shown, for sake of arranging the flange portion 149 within the seat 128. Another technical effect of a sub-division of the tubular body of the collet 116 with the plurality of second radial slits 147 may include the imparting of further elasticity to the plurality of molding fingers 140, whereby a required elasticity associated therewith may be provided at a minimal length of the collet 116.

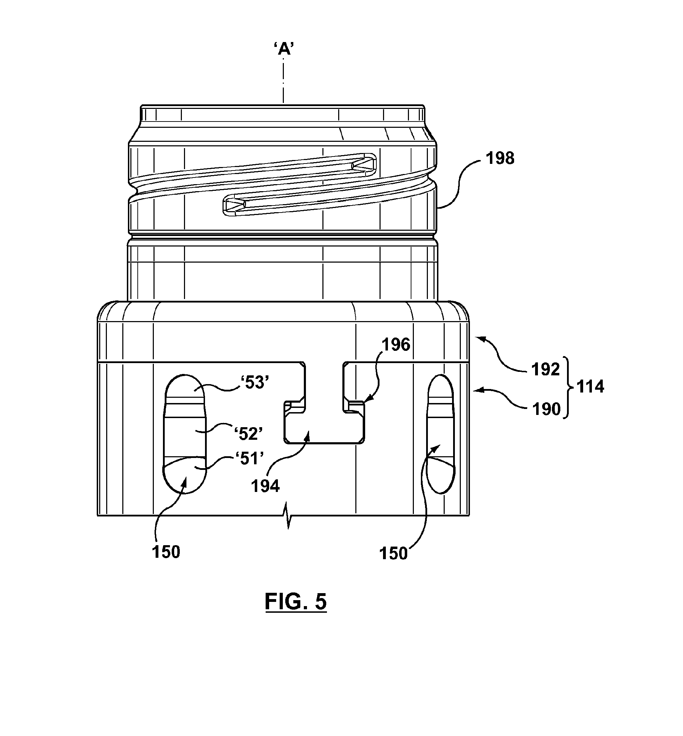

Further in view of the requirement to resiliently deflect the plurality of molding fingers 140 from the neutral configuration, as discussed previously, the non-limiting embodiment of the first stack portion 110 takes advantage of the relative re-positioning, in use, of the collet 116 and the outer core 114 to furthermore effect the deflection of the plurality of molding fingers 140. With reference to FIGS. 4 and 5, it can be appreciated that the non-limiting embodiment takes advantage of the foregoing by providing a cam follower 142 in association with each of the plurality of fingers and a cam 150 in association with the outer core 114, wherein each cam follower 142 is cooperable, in use, with the cam 150 to exercise the plurality of molding fingers 140 between the neutral configuration and the deflected configuration with the relative re-positioning of the collet 116 and the outer core 114. Without specific limitation thereto, the cam follower 142 on each of the plurality of molding fingers 140 may be provided as a first groove defined interiorly thereon along which one of a plurality of bearings 170 (e.g. ball bearings) may roll, in use, with which to link, in use, with the cam 150 that is associated with the outer core 114. Likewise, without specific limitation thereto, the cam 150 may be provided as a plurality of second grooves that are defined through an outer surface of the outer core 114, or more particularly along an outer surface of a core-base 190 thereof, as shown with reference to FIG. 5, and wherein each of the plurality of second grooves includes a further profiled depth along which, in use, one of the plurality of bearings 170 may rollably ramp (i.e. climb and descend) with reciprocation of the collet 116 relative to the outer core 114, and thereby vary an extent to which the plurality of bearings 170 project from the corresponding second grooves. The cam follower 142 by contrast has a more or less constant depth (although it need not be so in every case), whereby varying the extent to which the plurality of bearings 170 project from second grooves will cause the exercising (i.e. deflection) of the plurality of molding fingers 140. The foregoing is shown with reference to the operational sequence shown in FIGS 6A through 6E. The profile of the second grooves are not particularly limited, but may, as shown in the non-limiting embodiment, include several steps 'S1', 'S2', 'S3' for sake of providing a staged deflection of the plurality of molding fingers 140.

In another non-limiting embodiment, not shown, the cam 150 and the cam follower 142 may be swapped, wherein the cam 150 is associated with the plurality of molding fingers 140 and the cam follower is associated with the outer core 114.

Referring back to FIG. 4, it may be appreciated that the non-limiting embodiment of the collet 116 may be associated with a stripper ring 117, wherein the stripper ring 117 is slidably arrangeable in a pocket 141 that is collectively defined interiorly on the plurality of molding fingers 140. The stripper ring 117 is structured to define a base portion 143 of the molding cavity 101 with the mold stack 106. With reference to the operational sequence shown with reference to FIGS. 6A through 6E, it may be appreciated that there is relative sliding, in use, between the stripper ring 117 and the pocket 141 with the resilient deflection of the plurality of molding fingers 140 between the neutral configuration (FIG. 6A) and the deflected configuration (FIG. 6E). By virtue of the stripper ring 117 having a unitary construction (i.e. a single ring without gaps) it is able to remain positioned beneath a base part 105 of the molded article 102 throughout the operational sequence and thereby assist in supporting and otherwise pushing therebeneath throughout the stripping and subsequent ejection of the molded article 102, whereby the risk of de-molding related damage to the molded article 102 may be minimized. More particularly, instead of directing an entirety of an ejection force that is required to eject the molded article 102 off of the outer core 114 through a sidewall part 111 of the molded article 102 that is in contact with a bridge portion 151 on the plurality of molding fingers 140, a portion of the ejection force is instead applied through the base part 105 that is in contact with the stripper ring 117, whereby excessive force (i.e. large enough to cause plastic deformation to the molded article 102) to the sidewall part 111 is avoided.

The structure and operation of a non-limiting embodiment of the inner core 112 will now be described with reference to FIGS. 3 and 4. The inner core 112 has a generally tubular member having a closed end. A surface of the closed end defines, in use, an inner core portion 199 of the molding cavity 101. A hollow interior of the inner core 112 provides a space 115 for the circulating, in use, of a coolant therein for sake of cooling of the molded article 102 that is moldable thereon. The inner core 112 is fixable, in use, in the first mold shoe 130, as shown, wherein the first mold shoe 130 further includes a first retainer plate 132 that is releasably connectable to the core plate 131, by means of fasteners, for clamping a flange portion of the inner core 112 therebetween.

The structure and operation of a non-limiting embodiment of the outer core 114 will now be further described with reference to FIGS. 3, 4 and 5. The outer core 114 may include the core-base 190 and a core-tip 192, and wherein the core-tip 192 is structured to define the outer core portion 198 of the molding cavity 101. The core-base 190 and the core-tip 192 are both slidably arranged around the inner core 112 for accommodating a relative movement thereof, in use, along the first axis 'A' of the mold stack 106, between an outer core molding position (FIG. 6A) and a first stripping position (FIG. 6B). The molding cavity 101 is definable with the outer core 114 arranged in the outer core molding position, and wherein a seal portion 107 of the molded article 102 is de-moldable from the inner core 112 with the outer core 114 arranged in the first stripping position. Moreover, the core-tip 192 may be slidably linked to a free-end of the core-base 190 for accommodating, in use, a relative re-positioning thereof, along the first axis 'A', with the core-base 190 arranged at its limit of travel, wherein the core-tip 192 is free to continue sliding with the molded article 102, past the first stripping position (FIG. 6B), to a second stripping position (FIG. 6D). In so doing, the core-tip 192 is able to continue moving in tandem with the collet 116 as the plurality of molding fingers 140 are being deflected towards the deflected configuration, whereby the stripping of the molded article 102 from the core-tip 192 commences after the plurality of molding fingers 140 have at least partially released the encapsulated part 103 of the molded article (FIGS. 6D, 7D, and 8B).

More particularly, and as may be appreciated with reference to FIG. 3, the core-base 190 may include a tubular body that is slidably arranged around the inner core 112 and that is furthermore slidably linked to the first mold shoe 130 for accommodating, in use, a coordinated movement thereof (along with the core-tip 192 linked thereto) with the collet 116, along the first axis 'A', between the outer core molding position (FIG. 6A) and the first stripping position (FIG. 6B). More particularly, the first mold shoe 130 includes a core retainer 134 in association therewith, and wherein the core retainer 134 includes the first retainer plate 132 and a second retainer plate 133 that are releasably connectable together, by means of fasteners, to slidably trap a flange portion of the core-base 190 within a pocket that is defined therebeween. Furthermore, a resilient member 197 may also be associated with the core retainer 134 and the outer core 114, wherein the resilient member 197 is arranged in the pocket of the core retainer 134 beneath the core-base 190 with which to bias the outer core 114 (i.e. core-base 190 along with the core-tip 192 linked thereto) towards the first stripping position (FIG. 6B) with movement, in use, of the collet 116 from the collet molding position (FIG. 6A).

Likewise, and as may be appreciated with reference to FIG. 3, the core-tip 192 may include a further tubular body that is slidably arranged around the inner core 112 for accommodating, in use, a coordinated movement thereof with the collet 116, along the first axis 'A', between the outer core molding position (FIG. 6A) and the second stripping position (FIG. 6D). As may be appreciated with reference to FIG. 5, a surface of the further tubular body defines the outer core portion 198 of the molding cavity 101. Furthermore, the tubular bodies of the core-base 190 and the core-tip 192 may be slidably linked together, in use, through cooperating structures of a keyway 196 and a key 194 that are defined thereon, respectively, and wherein the key 194 is structured to be slidable in the keyway 196 along the first axis 'A' of the mold stack 106 for accommodating the movement of the core-tip between the first stripping position (FIGS. 6C and 8A) and the second stripping position (FIGS. 6D and 8B). The means by which the core-tip 192 may be slidably linked to the core-base 190 is not particularly limited, for example, in accordance with another non-limiting embodiment, not shown, that the location of the key 194 and the keyway 196 may be reversed, wherein they are otherwise defined by the core-base 190 and the core-tip 192, respectively.

It is also worthwhile noting that while the material from which the core-base 190 and the core-tip 192 are made is not particularly limited, it may be beneficial to manufacture the core-tip 192 from a material having a relatively high thermal conductivity, and/or resistance to wear.

In another non-limiting embodiment, not shown, the outer core 114 may include a common tubular body for providing at least some of the foregoing features associated with the core-base 190 and the core-tip 192 (i.e. forego the second stripping position that is made possible with the provision of the separate and slidably linked core-tip 192).

With reference to FIG. 4, it may be appreciated that the first stack portion 110, may further define an air dispenser 172 with which to perform an air-driven function. The air dispenser 172 may include one or more channels that are defined between grooves that are defined exteriorly through the outer cylindrical surface of the inner core 112 and cooperating inner cylindrical surfaces of the core-base 190, a ring seal 189, and of the core-tip 192. The ring seal 189 includes a tubular body having upper and lower portions that are arrangeable, in use, within complementary seats that are defined in the core-tip 192 and the core-base 190, respectively. The upper and lower portions cooperate, in use, with the complementary seats to provide an air-tight seal throughout the relative movement of the core-base 190 and the core-tip 192. The air dispenser 172 may further include an outlet 173 (FIG. 6B) that is revealed, in use, with movement of the outer core 114 towards the first stripping position through which air may be dispensed in behind the molded article 102, the outlet 173 may include a groove that is defined interiorly on the core-tip 192.

The air-driven function may include ejecting the molded article 102 from the first stack portion 110 with air behind each molded article 102. The air-driven function may also include assisting with releasing of the seal portion 107 (FIG. 6B) of the molded article 102 from between the outer core 114 and the inner core 112. Furthermore, the air-driven function may also include relieving of vacuum within the space defined between the molded article 102 and the inner core 112 and the outer core 114.

An air source 129 (FIG. 3) may be associated with a pressure regulator, not shown, for sake of adjusting the performance of the air-driven function. For example, adjusting the air pressure may have the technical effect of adjusting the distance that the molded article 102 is ejected.

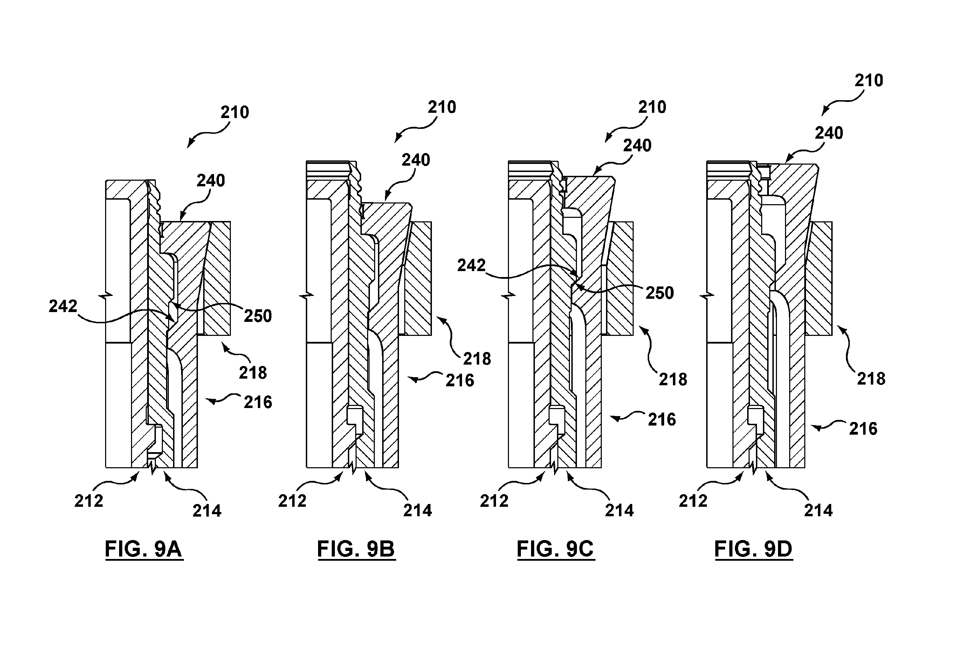

Reference will now be made to FIG. 9A which shows another non-limiting embodiment of a first stack portion 210. The first stack portion 210 is compatible with both of the first mold shoe 130 and the second stack portion 120 described previously. The structure and operation of the first stack portion 210 is similar to the first stack portion 110 described previously, and as such, only the differences thereto will be described in detail hereafter.

The non-limiting embodiment of the first stack portion 210 broadly includes an inner core 212, an outer core 214, and a collet 216. The collet 216, like the collet 116, defines a plurality of molding fingers 240. The non-limiting embodiment of the first stack portion 210 takes advantage of the fact of the relative re-positioning, in use, of the collet 216 and the outer core 214 to furthermore effect the deflection of the plurality of molding fingers 240. With reference to FIGS. 9A through 9D, it can be appreciated that the non-limiting embodiment takes advantage of the foregoing by providing a cam follower 242 in association with each of the plurality of fingers and a cam 250 in association with the outer core 214, wherein each cam follower 242 is cooperable, in use, with the cam 250 to exercise the plurality of molding fingers 240 between a neutral configuration (FIG. 9A) and a deflected configuration (FIG. 9D) with the relative re-positioning of the collet 216 and the outer core 214. The cam follower 242 on each of the plurality of molding fingers 240 may be provided as a tapered projection defined interiorly thereon that is cooperable, in use, with a tapered recess that is defined exteriorly on the outer core 214.

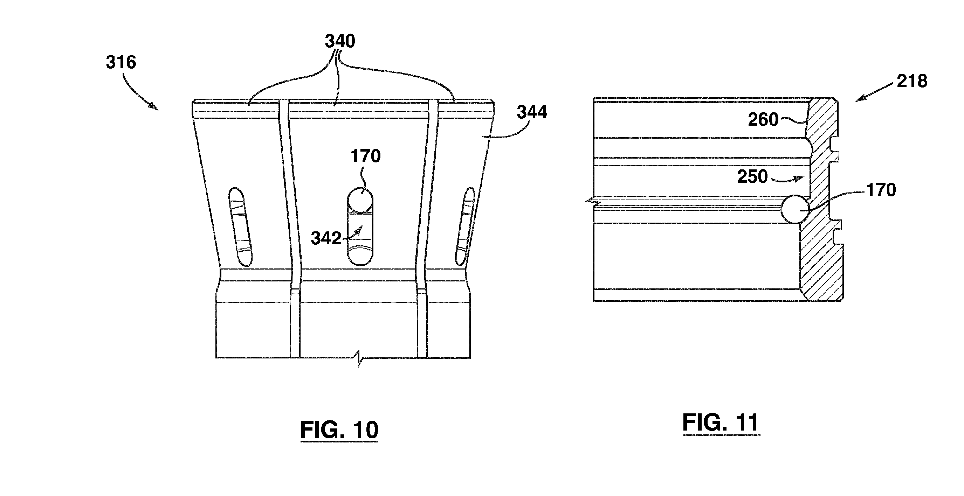

The description shall now shift to the construction and operation of yet another alternative non-limiting embodiment of the mold stack 306, as shown with reference to FIGS. 10, 11, and 12A. The mold stack 306 is structured similarly to the mold stack 106 of FIG. 3, and as such includes a first stack portion 310 having an inner core 112, an outer core 314, and a collet 316 that defines a plurality of molding fingers 340. That being said, only the differences of construction and operation thereof will be described in detail in the description that follows.

One such difference is that the collet 316, as shown with reference to FIG. 10, is structured such that the plurality of molding fingers 340 that are defined thereby are arrangeable in abutting relation with the resilient deflection thereof, in use, to the deflected configuration. That is, the plurality of molding fingers 340 are normally open.

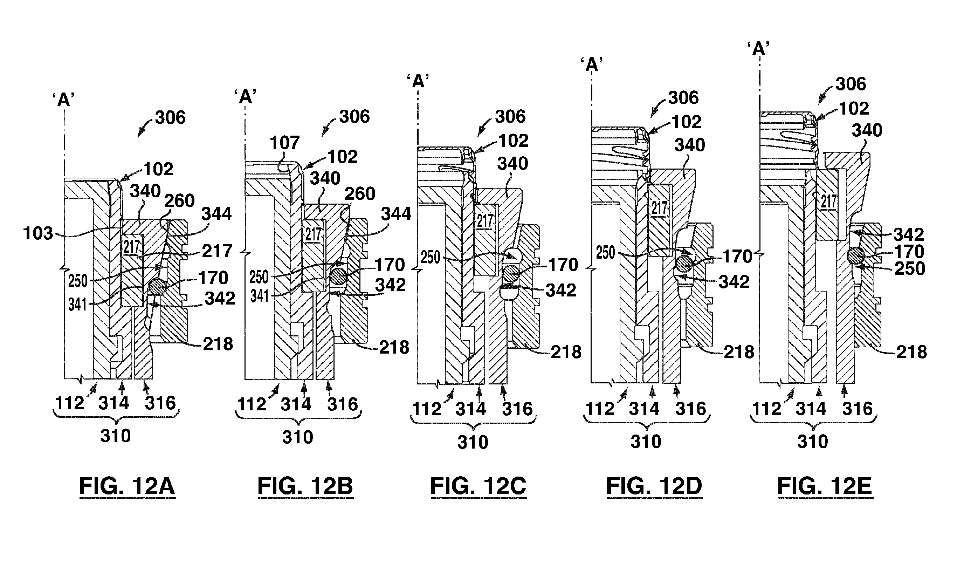

Another difference is that the cam follower 342 on each of the plurality of molding fingers 340 may be provided as a first groove defined exteriorly thereon. Also, the cam 250, as shown with reference to FIG. 11, is provided as a second groove that is defined along an inner surface of the lock ring 218. However, similar to before, the cam follower 342 and the cam 250 are linked, in use, by a bearing 170, as can be best appreciated with reference to FIGS. 12A-12E, and wherein the first groove and the second groove of the cam follower 342 and the cam 250, respectively, have profiles along which the bearing 170 may rollably ramp, in use, such that the plurality of molding fingers 340 are exercised between the deflected configuration (FIG. 12A) and the neutral configuration (FIG. 12E) with the relative re-positioning of the collet 316 and the lock ring 218 along the first axis 'A'.

The operation of the first stack portion 310 will now be briefly described with reference to FIGS. 12A through 12E.

With reference to FIG. 12A, the first stack portion 310 is shown in a configuration that coincides with the injection mold having been opened, wherein the inner core 112, the outer core 314, and the collet 316 are arranged in their respective molding positions with a molded article 102 arranged thereon. In this configuration the plurality of molding fingers 340 are kept in abutment through contact between the collet taper 344 and the lock taper 260.

With reference to FIG. 12B, the first stack portion 310 is shown in a configuration that coincides with a beginning phase of ejection of the molded article 102. More particularly, the outer core 314 and the collet 316 have been re-positioned relative to the inner core 112, along the first axis 'A', into a stripping position, wherein a seal portion 107 of the molded article 102 is de-molded from the inner core 112. As such, the cam 250 and the cam follower 342 may be profiled, as shown, such that the plurality of fingers 340 remain in supporting contact with the molded article 102 throughout the stripping of the seal portion 107. That being said, the plurality of molding fingers 340 may be opened a slight amount during this phase, such as to allow for expansion of the molded article 102 during the stripping of the seal portion 107, which can be appreciated by contrasting the position of the stripper ring 217 within the pocket 341 between FIGS 12A and 12B. It is also worthwhile noting that the cam 250 and the cam follower 342 may also be profiled to minimize sliding contact between the collet taper 344 and the lock taper 260 throughout at least a portion of this phase, a technical effect of which may be to reduce wear thereto.

With reference to FIGS. 12C and 12D, the first stack portion 310 is shown in a configuration that coincides with a latter phase of ejection of the molded article 102. More particularly, with the outer core 316 having reached its stripping position, the collet 316 is further re-positioned towards an ejection position, along the first axis 'A', wherein the molded article 102 undergoes de-molding from the outer core 314. As such, the cam 250 and the cam follower 342 may be further profiled, as shown, such that the plurality of fingers 340 may be opened further such as to allow for expansion of the molded article 102 during ejection, and yet remain in supporting contact therewith, albeit with a reduced contact area.

With reference to FIG. 12E, the first stack portion 310 is shown in a configuration that coincides with the completion of the ejection of the molded article 102. More particularly, the collet 316 has been re-positioned into the ejection position, along the first axis 'A', and the molded article 102 is no longer in contact therewith. As such, the cam 250 and the cam follower 342 may be further profiled, as shown, such that the plurality of fingers 340 may be sufficiently opened to allow for the encapsulated portion 103 of the molded article 102 to be released therefrom.

It is noted that the foregoing has outlined some of the more pertinent non-limiting embodiments. These non-limiting embodiments may be used for many applications. Thus, although the description is made for particular arrangements and methods, the intent and concept of these non-limiting embodiments may be suitable and applicable to other arrangements and applications. It will be clear to those skilled in the art that modifications to the disclosed non-limiting embodiments can be effected. The described non-limiting embodiments ought to be construed to be merely illustrative of some of the more prominent features and applications thereof. Other beneficial results can be realized by applying these non-limiting embodiments in a different manner or modifying them in ways known to those familiar with the art. This includes the mixing and matching of features, elements and/or functions between various non-limiting embodiments is expressly contemplated herein, unless described otherwise, above.

## Claims

1. A molding apparatus, comprising:
a collet (116, 316) for use in a first stack portion (110, 310) of a mold stack (106, 306), the mold stack (106, 306) being associated, in use, with an injection mold (100), wherein the collet (116, 316) is structured to define a plurality of molding fingers (140, 340) that are resiliently deflectable, in use, between a neutral configuration and a deflected configuration, the plurality of molding fingers (140, 340) being cooperable to define an encapsulated portion (145) of a molding cavity (101) when arranged in abutment;
each of the plurality of molding fingers (140, 340) defines a cam follower (142, 342) that is cooperable, in use, with a bearing (170) with which to link the cam follower (142, 342) with a cam (150, 250) for the exercising thereof between the neutral configuration and the deflected configuration.

2. The molding apparatus of claim 1, further comprising:
an outer core (114, 314) of the first stack portion (110, 310) with which to define an outer core portion (198) of the molding cavity (101);
wherein the collet (116, 316) has a tubular body that is slidably arrangeable, in use, around the outer core (114, 314) for accommodating a relative re-positioning thereof, in use, along a first axis ('A') of the mold stack (106, 306).

3. The molding apparatus of claim 2, wherein:
the cam follower (142) on each of the plurality of molding fingers (140) is defined interiorly thereon;
the outer core (114) defines the cam (150) that is cooperable with the bearing (170) to link with the cam follower (142);
wherein the cam follower (142) and the cam (150) are profiled such that the plurality of molding fingers (140) are exercised between the neutral configuration and the deflected configuration with the relative re-positioning of the collet (116) and the outer core (114) along the first axis ('A').

4. The molding apparatus of claim 3, wherein:
the cam follower (142) that is defined on each of the plurality of molding fingers (140) is provided as a first groove defined interiorly thereon along which the bearing (170) may roll; and the cam (150) is provided as a plurality of second grooves that are defined through an outer surface of the outer core (114).

5. The molding apparatus of claim 4, wherein:
at least one of the cam (150) and the cam follower (142) has a profile along which, in use, the bearing (170) may rollably ramp.

6. The molding apparatus of claim 2, wherein:
the outer core (114) includes a core-base (190) and a core-tip (192), wherein the core-tip (192) is slidably linkable to the core-base (190) for accommodating, in use, the relative re-positioning thereof along the first axis ('A') of the mold stack (106);
wherein the core-tip (192) is structured to define the outer core portion (198) of the molding cavity (101) with the mold stack (106) arranged in a molding configuration.

7. The molding apparatus of claim 6, wherein:
the core-base (190) defines one of a key (194) and a keyway (196), and wherein the core-tip (192) defines another one of the key (194) and the keyway (196), and wherein the key (194) is structured to be slidable in the keyway (196) along the first axis ('A') of the mold stack (106).

8. The molding apparatus of claim 2, further comprising:
a lock ring (118, 218);
a lock taper (160, 260) being defined interiorly on the lock ring (118, 218);
a collet taper (144, 344) being defined exteriorly on the plurality of molding fingers (140, 340);
the lock taper (160, 260) and the collet taper (144, 344) being cooperable, in use, to lock the plurality of molding fingers (140, 340) together in abutment with arranging of the mold stack (106, 306), along the first axis ('A'), into a molding configuration.

9. The molding apparatus of claim 8, wherein:
the cam follower (342) on each of the plurality of molding fingers (340) is defined exteriorly thereon;
the lock ring (218) defines the cam (250) that is cooperable with the bearing (170) to link with the cam follower (342);
wherein the cam follower (342) and the cam (250) are profiled such that the plurality of molding fingers (340) are exercised between the neutral configuration and the deflected configuration with the relative re-positioning of the collet (316) and the lock ring (218) along the first axis ('A').

10. The molding apparatus of claim 9, wherein:
the cam follower (342) that is defined on each of the plurality of molding fingers (340) is provided as a first groove defined exteriorly thereon along which the bearing (170) may roll; and the cam (250) is provided as a second groove that is defined along an inner surface of the lock ring (218).

11. The molding apparatus of claim 10, wherein:
at least one of the cam (150) and the cam follower (142) has a profile along which, in use, the bearing (170) may rollably ramp.

12. The molding apparatus of claim 2, wherein:
the plurality of molding fingers (140) are defined between a plurality of first radial slits (146) that extend through the tubular body, and wherein the plurality of first radial slits (146) extend along a portion of a length of the tubular body from a first end thereof.

13. The molding apparatus of claim 12, wherein:
the collet (116, 216) further defines a plurality of retaining fingers (148) that are resiliently deflectable, in use, between an installed configuration and an assembly configuration
the plurality of retaining fingers (148) are defined between a plurality of second radial slits (147) that extend through the tubular body, and wherein the plurality of second radial slits (147) extend along a further portion of the length of the tubular body from a second end thereof.

14. The molding apparatus of claim 8, further comprising:
an inner core (112, 212) of the first stack portion (110, 210) that defines an inner core portion (199) of the molding cavity (101);
the outer core (114, 314) is slidably arrangeable around the inner core (112, 212) for accommodating a relative movement thereof, in use, along the first axis ('A') of the mold stack (106).

15. The molding apparatus of claim 14, further comprising:
a stripper ring (117, 217) that is slidably arrangeable in a pocket (141, 341) that is collectively defined interiorly on the plurality of molding fingers (140);
the stripper ring (117, 217) is structured to define a base portion (143) of the molding cavity (101) with the mold stack (106) arranged in the molding configuration.
